**Europäisches Patentamt**

**European Patent Office**

**Office européen des brevets**

(11) Veröffentlichungsnummer: **0 347 541**

**A1**

# (12) EUROPÄISCHE PATENTANMELDUNG

(21) Anmeldenummer: **89106762.1**

(22) Anmeldetag: **15.04.89**

(51) Int. Cl.⁴: **H04L 27/20 , H04H 1/00**

(30) Priorität: **22.06.88 DE 3821014**

(43) Veröffentlichungstag der Anmeldung:
**27.12.89 Patentblatt 89/52**

(84) Benannte Vertragsstaaten:
**CH DE FR GB LI**

(71) Anmelder: **Licentia Patent-Verwaltungs-GmbH**
**Theodor-Stern-Kai 1**
**D-6000 Frankfurt/Main 70(DE)**

(72) Erfinder: **Rudolph, Dietmar, Prof., Dr.**
**Glockenstrasse 2c**
**D-1000 Berlin 37(DE)**
Erfinder: **Tröger, Peter, Dipl.-Ing.**
**Altmariendorf 56a**
**D-1000 Berlin 42(DE)**

(74) Vertreter: **Schulze, Harald Rudolf, Dipl.-Ing. et al**
**Licentia Patent-Verwaltungs-GmbH**
**Theodor-Stern-Kai 1**
**D-6000 Frankfurt/Main 70(DE)**

(54) **Verfahren zur digitalen Phasenmodulation eines Trägers durch Datensignale und digitaler Phasenmodulator zum Ausführen des Verfahrens.**

(57) Die Erfindung betrifft ein Verfahren zur digitalen Phasenmodulation eines Trägers durch Datensignale, das auf einem modifizierten Quadratur-Amplituden-Modulationsverfahren beruht, das sich aus einer Amplitudenmodulation (AM) des Trägers und einer um 90° gedrehten Doppelseitenbandmodulation (DSB) zusammensetzt. Die AM und die DSB werden dabei so geführt, daß der resultierende Zeiger der Phasenmodulation eine konstante Länge behält und der Zeitverlauf des Pendelns exakt mit dem modulierenden Signal übereinstimmt. Die Zeitfunktionen der AM- und DSB-Signale sind als Stützwerte in EPROMs abgelegt. Die EPROMs werden in Abhängigkeit von den zu übertragenden Daten so ausgelesen, daß sich eine 90°-Drehung des DSB-Signals gegenüber dem AM-Signal ergibt. Die Formung und Bandbegrenzung der Daten erfolgt durch geeignete Wahl der Stützwerte im EPROM. Die Modulation erfolgt jeweils in Ex-OR-Schaltmodulatoren, denen ein Latchglied und ein Digital-Analog-Wandler nachgeschaltet ist. Die Ausgänge der beiden Digital-Analog-Wandler werden zu dem gesuchten Phasenmodulationssignal addiert. In einem nachgeschalteten Bandpaß wird das Signal von Störanteilen befreit.

FIG. 3

# Verfahren zur digitalen Phasenmodulation eines Trägers durch Datensignale und digitaler Phasenmodulator zum Ausführen des Verfahrens

Die Erfindung betrifft ein Verfahren zur digitalen Phasenmodulation eines Trägers durch Datensignale gemäß Oberbegriff des Patentanspruchs 1 sowie einen digitalen Phasenmodulator zum Ausführen des Verfahrens.

Grundlage des Verfahrens ist das an sich bekannte und beispielsweise in dem "Lehrbuch der Hochfrequenztechnik", Band 2: "Elektronik und Signalverarbeitung", 2. Auflage (Springer-Verlag, Berlin, 1974) von Zinke und Brunswig auf den Seiten 324 und 328 beschriebene Verfahren, bei dem eine Frequenzmodulation ("FM") in zwei orthogonale amplitudenmo dulierte Schwingungen aufgespalten wird. Durch eine vektorielle Addition zweier um $90°$ in ihrer Phase gegeneinander gedrehter ("orthogonaler") Amplitudenmodulationen ("AM") kann jedoch bekanntlich eine Phasenmodulation ("PM") erzeugt werden, wobei die AM des nicht in seiner Phase gedrehten Trägers im sogenannten "In-Phase"-Zweig des Phasenmodulators durch

$$I(t) = A \cos \{ \phi(t) \} \qquad (1)$$

und die AM des um $90°$ in seiner Phase gedrehten Trägers im sogenannten "Quadratur"-Zweig des Phasenmodulators durch

$$Q(t) = A \sin \{ \phi(t) \} \qquad (2)$$

beschrieben ist mit

| $Q(t), I(t)$ | : | amplitudenmodultierte Trägeramplitude; |
| $A$ | : | resultierende phasenmodulierte Trägeramplitude; |
| $\phi(t)$ | : | Phasenwinkel (proportional zum modulierenden Signal; hier: verrundetes Datensignal). |

Aus der DE-AS 23 63 214 ist ein digitaler Phasenmodulator für analoge bandbegrenzte Niederfrequenz-(NF)-Modulationssignale bekannt, der auf der Grundlage des bei Zinke/Brunswig beschriebenen Verfahrens arbeitet. Der bekannte Modulator besteht aus einem In-Phase- und einem Quadraturzweig, die ausgangsseitig in einem Additionsglied zusammengeführt sind. Das durch ein den Zweigen vorgeschaltetes analoges Tiefpaßfilter bandbegrenzte NF-Modulationssignal f(t) durchläuft im In-Phase-Zweig einen Cosinus- und im Quadratur-Zweig einen Sinus-Wandler, durch die f(t) in

$$i(t) = \cos \{K \cdot f(t)\} \qquad (3)$$

bzw.

$$q(t) = \sin \{K \cdot f(t)\} \qquad (4)$$

umgewandelt wird mit K = Modulationsindex. Die Signale i(t) bzw. q(t) durchlaufen anschließend jeweils eine Abtasteinheit und ein analoges Tiefpaßfilter, bevor sie jeweils in einem analog aufgebauten Modulator den Träger in seiner Amplitude modulieren. Dabei ist der Träger, der dem Modulator im Quadratur-Zweig zugeführt wird, um $90°$ in seiner Phase gedreht gegenüber dem Träger, der dem Modulator im In-Phase-Zweig zugeführt wird.

Vorgeschlagen wurden ferner anlog arbeitende PM-Verfahren, bei denen der Trägerfrequenz-Oszillator durch einen Quarz oder ein Atomnormal in seiner Frequenz stabilisiert ist und nur in seiner Phase moduliert wird im Unterschied zu der verwandten Frequenzmodulation (FM), bei der die Frequenz eines frei schwingenden Oszillators moduliert wird.

Die Modulation der Phase kann bei diesen analogen Lösungen beispielsweise mit Hilfe eines Serrasoid-Modulators (vgl. hierzu die S. 343 in dem eingangs zitierten "Lehrbuch der Hochfrequenztechnik" von Zinke/Brunswig) oder mit Hilfe eines Allpaßfilters 1. Ordnung realisiert werden, das einen Operationsverstärker und eine Kapazitätsvariationsdiode enthält.

Nachteilig wirkt sich beim Serrasoid-Modulator aus, daß die phasenmodulierte Trägerschwingung wegen ihrer Mäanderform noch nachträglich gefiltert werden muß. Ein Nachteil des Allpaßfilter-Modulators besteht darin, daß i. a. nichtlinare Verzerrungen der Kurvenform der ausgesendeten Daten auftreten die sowohl durch die modulierende Kapazitätsvariationsdiode hervorgerufen werden als auch durch einen arctangens-Zusammenhang zwischen der Phasenmodulation und dem Zeitverlauf der Datenform.

Die Nachteile analoger Lösungen bestehen vor allem darin:

- daß keine Code-Wandlung vorgeshen ist;

- daß die Datenübertragungsrate nicht ohne vorherige Umdimensionierung des Formungsfilters geändert werden kann;

- daß in den weiter unten erläuterten AM-RDS-Systemen keine optimale Kurvenform bezüglich der Kompatibilität zum normalen Rundfunkprogramm und bezüglich der Datenübertragungssicherheit mit einfachen Mitteln erreichbar ist.

Ein allgemeiner Nachteil von analogen Lösungen besteht darin, daß die Schaltungen abgeglichen werden müssen und daß dieser Abgleich unter ungünstigen Umständen aufgrund von Drifteffekten (z. B. wegen Erwärmung der Bauelemente) auch während des Betriebs durchgeführt werden muß.

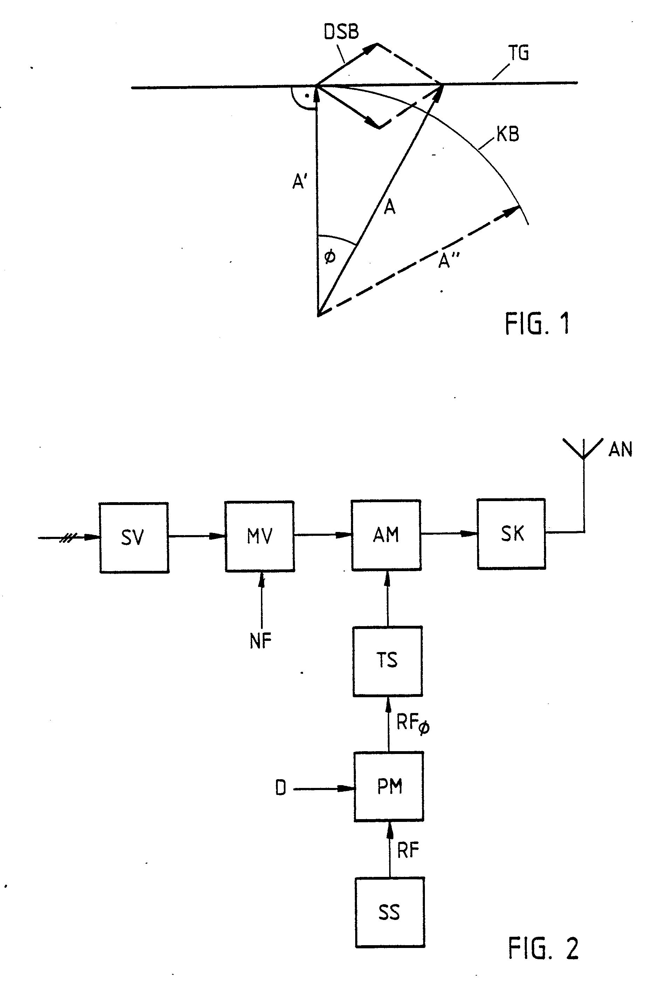

Anhand des in FIG. 1 gezeigten bekannten PM-Verfahrens nach Armstrong, das auch unter dem Namen "Schmalband-FM" bekannt ist, soll der Unterschied zum erfindungsgemäßen Modulationsverfahren erläutert werden.

Bei diesem bekannten Verfahren, welches meist analog realisiert wird, wird die PM gemäß dem (nicht maßstäblich gezeichneten) Zeigerdiagramm in FIG. 1 durch vektorielle Addition einer um 90° gedrehten Doppelseitenmodulation DSB und eines nicht in seiner Phase gedrehten Trägers konstanter Amplitude A' erzeugt. Die Amplitude A des resultierenden, um den Phasenwinkel $\phi$ ausgelenkten ("phasenmodulierten") Trägers bewegt sich bei diesem Verfahren mit ihrer Spitze auf einer Geraden TG, die senkrecht zur Amplitude A' des unmodulierten Trägers und tangential zu einem Kreisbogen KB verläuft, der durch die Spitze der Amplitude A" eines exakt phasenmodulierten Trägers beschrieben wird.

Wie aus der Figur hervorgeht, ist dieses bekannte PM-Verfahren nur für sehr kleine Phasenhübe richtig, nämlich nur für den Phasenwinkelbereich, in dem der Kreisbogen KB durch die tangential verlaufende Gerade TG näherungsweise ersetzt werden kann. Für größere Phasenhübe ergeben sich bei diesem Verfahren wegen des Arcustangens-Verlaufs ein Amplituden-und ein Phasenfehler, so daß zur exakten Beschreibung der PM für diesen Fall weitere Seitenlinien höherer Ordnung benötigt werden, deren Größe sich für ein sinusförmig moduliertes Signal mit Hilfe von Bessel-Funktionen ergibt.

Mit dem beschriebenen PM-Verfahren eröffnet sich grundsätzlich die Möglichkeit, in Informationsübertragungssystemen mit amplitudenmoduliertem Träger auf einfache Art und Weise durch Modulation der Phase des Trägers zusätzlich digitale Daten übertragen zu können. Beispielsweise können in AM-Hörrundfunksystemen im Lang-, Mittel- oder Kurzwellenbereich mit solchen Verfahren zusätzliche digitale Informationen im Simplexverkehr simultan und kompatibel (d. h. unhörbar) zum normalen Rundfunkprogramm übertragen werden, wie z. B. Verkehrsinformationen.

Realisiert wird ein solches AM-Radio-Daten-System ("AM-RDS") beispeilsweise, indem gemäß FIG. 2 der noch unmodulierte Träger RF des Steuersenders SS in einem nachgeschalteten Phasenmodulator PM mittels eines geeigneten PM-Verfahrens mit den zu übertragenden Daten D in seiner Phase moduliert wird und der nunmehr phasenmodulierte Träger RF$_\phi$ über eine Treiberstufe TS in die RF-Endstufe AM des Senders eingespeist wird und dort in bekannter Art und Weise mit dem durch den Modulationsverstärker MV verstärkten NF-Signal in seiner Amplitide moduliert wird. Der amplituden- und phasenmodulierte Träger wird anschließend über einen RF-Schwingkreis SK der Antenne AN zugeleitet und ausgestrahlt. Die benötigte Energie bezieht der Sender über die Stromversorgung SV. Ein solcherart modifiziertes AM-Hörrundfunksystem ist beispielsweise in der DE-OS 36 16 864 beschrieben.

Mit AM-RDS kann somit ein für die großflächige Überbrückung größerer Entfernungen (auch infrastrukturell wenig erschlossener Gebiete) ein Simplex-Datenkanal realisiert werden, der in der Regel ohne große Schwierigkeiten in bereits existierende Sender implementiert werden kann (vgl. hierzu: E. Augustin, R. Kühne "Ein neuartiges Verfahren zur sätzlichen, simultanen und kompatiblen Übertragung von digitalen Informationen über ein AM-Hörrundfunksystem im Simplexverkehr", Technische Mitteilungen des RFZ, 30. Jahrgang, Heft 2, 1986, Seiten 25 bis 30).

Die über diesen Simplex-Kanal übertragenen Informationen können beispeilsweise sein:

- Abstimmhilfen (Programmkettenkennung, Name der Programmkette, Programmart, alternative Frequenzen usw.),
- Stationskenndaten z. B. für die Fernüberwachung,
- Verkehrsinformationen, die gegebenenfalls regional strukturiert bzw. adressiert sein können und die gegebenenfalls als Steuerbefehle für einen empfängerseitigen Speicher zur Informationsausgabe oder z. B. mit Hilfe eines empfängerseitig lokalisierten Sprachausgabesystems als Klartext gesendet werden können,
- Wetterdienstinformationen,
- Alarm-, Ruf- und Sicherheitsinformationen,
- Schaltsignale (Verkehrsdurchsagekennung, Decodersteuerung, Musik/Sprache-Kennung, Programmbeitragskennung usw.),
- Zeit/Frequenzinformationen, z. B. zur Steuerung von öffentlichen Haupt- und Nebenuhren,
- Fernschreibinformationen im Punkt-zu-Fläche-Betrieb (Simplex),
- Fernwirksignale für spezielle Nutzer bei großflächiger Wirkung und fester oder beweglicher Empfangsstellen ohne Rückkanal.

3

Der Vorteil eines solchen AM-RDS ist vor allem darin zu sehen, daß die Übertragung der Informationen ohne zusätzlichen Frequenz- und Energiebedarf über bereits installierte Sender erfolgen kann.

Ein wesentlicher Nachteil der bekannten AM-RDS besteht darin,

- daß in den verwendeten PM-Modulatoren RC-Tiefpaßfilter 2. Ordnung, gegebenenfalls 3. Ordnung, zum Verrunden der zu übertragenden Daten eingesetzt werden, so daß die Datensignale i. a. keinen optimalen Zeitverlauf haben und sich nicht auf die theoretisch notwendige Mindestbandbreite begrenzen lassen und damit verbunden ein vergleichsweise nur geringer Störabstand zum AM-Kanal auftritt, so daß Störungen des AM-Kanals durch die zusätzlich übertragenen Daten nicht ausgeschlossen werden können;

- daß analoge Filter abgeglichen werden müssen;

- daß keine Code-Wandlung erfolgt;

- daß kein gleichanteilsfreier Code verwendet wird;

- daß keine Taktinformationen im Datensignal enthalten sind und deswegen das vom Fernschreiber her bekannte "Start-Stop"-Verfahren angewendet wird, das keine optimalen Übertragungsgeschwindigkeiten zuläßt;

- daß keine Code-Sicherung gegen Fehler vorhanden ist.

Andere Einsatzmöglichkeiten der eingangs diskutierten PM-Verfahren ergeben sich beispielsweise bei der Steuerung der Lastverteilung in nationalen bzw. supranationalen Stromversorgungsnetzen oder in der Studiotechnik bei der 15kHz-Datenübertragung vom Studio zu den einzelnen Sendern.

Die Aufgabe der Erfindung besteht darin, ein Verfahren der eingangs genannten Art zu schaffen, mit dem eine möglichst geringe Verzerrung der zu übertragenden Datensignale erzielt wird. Darüber hinaus soll mit dem zu schaffenden Verfahren bei dessen Einsatz in einem AM-RDS die wechselseitige Störung der zu übertragenden Datensignale und des normalen Programms möglichst gering, d.h. der Störabstand vom Simplex-Datenkanal zum AM-Kanal möglichst groß sein.

Die erfindungsgemäße Lösung der Aufgabe ist im Patentanspruch 1 beschrieben. Die Ansprüche 2 bis 7 enthalten vorteilhafte Aus- und Weiterbildungen des erfindungsgemäßen Verfahrens, während die Ansprüche 8 bis 15 vorteilhafte Ausführungsformen des erfindungsgemäßen Phasenmodulators zum Ausführen des erfindungsgemäßen Verfahrens beschreiben. Die Ansprüche 16 bis 19 schließlich enthalten bevorzugte Anwendungen der Erfindung.

Im folgenden wird die Erfindung anhand der Figuren näher erläutert. Es zeigen:

FIG. 1 das bereits diskutierte Zeigerdiagramm für das bekannte PM-Verfahren nach Armstrong ("Schmalband-FM").

FIG. 2 das bereits diskutierte Blockschaltbild eines bekannten AM-Hörrundfunksenders mit implementiertem AM-RDS.

FIG. 3 ein Zeigerdiagramm für die erfindungsgemäße Modifikation des Quadratur-Amplitudenmodulationsverfahrens, das dem erfindungsgemäßen Verfharen zur digitalen Phasenmodulation zugrunde liegt.

FIG. 4 eine andere Darstellung des Zeigerdiagramms gemäß FIG. 3.

FIG. 5 ein Blockschaltbild des erfindungsgemäßen digitalen Phasenmodulators zum Ausführen des erfindungsgemäßen digitalen PM-Verfahrens gemäß den FIG. 3 und 4.

FIG. 6 eine detaillierter ausgeführtes Blockschaltbild einer bevorzugten Ausführungsform des erfindungsgemäßen digitalen Phasenmodulators gemäß FIG. 5.

FIG. 7 einen detaillierter ausgeführten Ausschnitt der Ausführungsform des digitalen Phasenmodulators gemäß FIG. 6 mit dem In-Phase-Zweig des erfindungsgemäßen digitalen Phasenmodulators.

FIG. 8 eine bevorzugte Abwandlung der Implementierung der AM-RDS mit dem erfindungsgemäßen digitalen Phasenmodulator in einem AM-Hörrundfunksender gemäß FIG. 2.

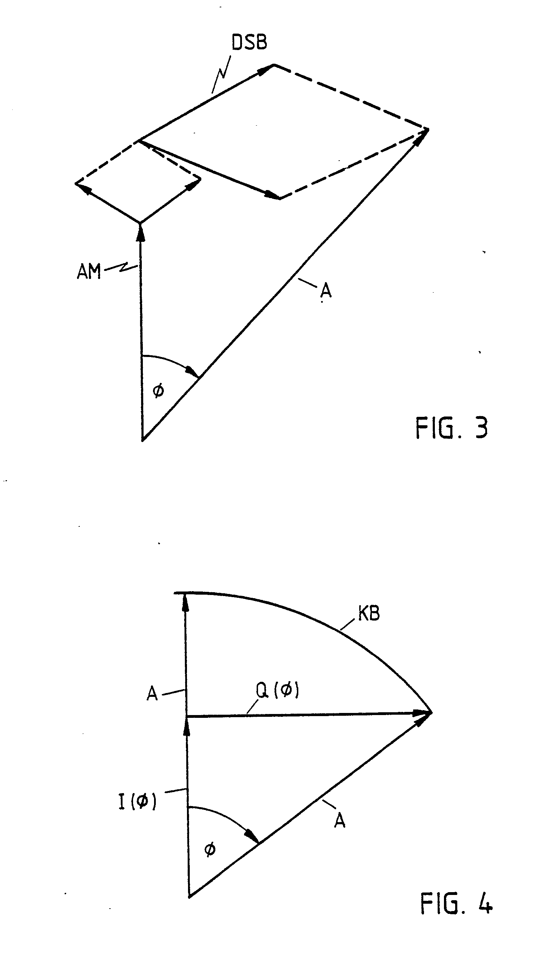

Grundlage des erfindungsgemäßen Verfahrens zur digitalen Phasenmodulation ist ein modifiziertes Quadratur-Amplituden-Modulationsverfahren ("QAM"). Dieses Verfahren setzt sich gemäß FIG. 3 zusammen aus einer Amplitudenmodulation AM des Trägers und einer um $90°$ gedrehten Doppelseitenbandmodulation DSB. Die AM und die DSB werden dabei so ausgeführt, daß der Zeiger A der daraus resultierenden PM sowohl eine konstante Länge behält als auch der Zeitverlauf seines Pendelns, also $\phi(t)$, exakt mit dem modulierenden Signal übereinstimmt.

Wie aus FIG. 2 hervorgeht, addieren sich dabei die beiden amplitudenmodulierten und um $90°$ gegeneinander gedrehten Trägeramplituden $I(\phi)$ bzw. $Q(\phi)$ des In-Phase- bzw. des Quadratur-Zweiges vektoriell so, daß der Zeiger A der daraus resultierenden PM mit seiner Spitze auf einem Kreisbogen KB hin- und herpendelt. Auf diese Weise ist ein beliebiger Phasenhub realisierbar, was aber für die hier betrachtete Anwendung eines AM-RDS ohne Bedeutung ist, da sich im Fall von Datenübertragung im AM-Hörrundfunk gezeigt hat, daß aus Kompatibilitätsgründen nur Phasenhübe von maximal $\pm 30°$ in Frage kommen.

4

Da mit der erfindungsgemäßen Phasenmodulation verrundete Daten übertragen werden sollen, haben deren Zeitverläufe und damit auch die Phasenverläufe der PM eine wohldefinierte Form, die sich für alle denkbaren Bit-Kombinationen leicht berechnen lassen.

Erfindungsgemäß werden daher diese Zeitverläufe für das AM-Signal und das DSB-Signal zuvor berechnet und als Stützwerte jeweils in einem Speicher, z. B. einem EPROM, abgelegt. Die EPROMs werden anschließend in Abhängigkeit von den momentan zu übertragenden Daten so ausgelesen, daß sich eine 90°-Drehung des DSB-Signals gegenüber dem AM-Signal ergibt.

Ein ähnliches Modulationsverfahren verwendet das Radio-Daten-System, das für frequenzmodulierte Sender im UKW-Bereich vorgeschlagen wurde ("UKW-RDS") (vgl. hierzu: F. Stollenwerk "RDS - Ein neuer Dienst im UKW-Rundfunk", NTZ, 40 (1987) 5, Seiten 346 bis 351).

Bei diesem System wird ein Doppelseitenband-Signal bei 57 kHz benötigt, bei dem die Phasenlage des (unterdrückten) Trägers um 90° gegenüber dem Verkehrsfunkträger bei ebenfalls 57 kHz, dem sogenannten ARI-System (Auto-Rundfunk-In formations-System), gedreht ist. Der Zeitverlauf dieser DSB ist in modulierter und verrundeter Form in einem Speicher (EPROM) abgelegt und wird in Abhängigkeit vom zu übertragenden Datensignal ausgelesen und ausgesendet.

Die im allgemeinen nicht bandbegrenzten digitalen Datensignale (z. B. NRZ-Signale: Non-Return-to-Zero-Signale) werden beim erfindungsgemäßen Verfahren zuvor zwecks spektraler Formung und Bandbegrenzung einer digitalen Filterung unterworfen, wobei die zu filternden Daten vor oder während der digitalen Filterung durch eine Codewandlung gleichstromfreigemacht werden und gegebenenfalls mit für die weitere Verarbeitung erforderlichen Taktinformationen versehen werden.

Zur Realisierung der digitalen Filterung von binären Datensignalen werden die Datensignale beim erfindungsgemäßen Verfharen zunächst in eine Folge von Worten einer vorgegebenen Länge mit einer ungeraden Anzahl von Bits unterteilt. Für jedes mögliche Wort wird anschließend der dem mittleren Bit des Wortes entsprechende Zeitverlauf des gefilterten Wortes berechnet und in Form von Stützwerten in einem durch das Wort adressierten Bereich mindestens eines Speichers abgelegt.

Bei der Datenübertragung werden durch das momentan anliegende (zu übertragende) Wort der ihm zugeordnete Bereich in dem mindestens einen Speicher angewählt und die in diesem Bereich abgelegten Stützwerte synchron zur Frequenz des Trägers ausgelesen.

Zur Reduzierung der für die weitere Verarbeitung der Datensignale erforderlichen Wortlänge werden die zuvor berechneten Zeitverläufe der gefilterten Worte vorteilhafterweise mit einer vorgegebenen Fensterfunktion gewichtet.

Aus Synchronitätsgründen muß die Dauer der einzelnen Bits als ganzzahliges Vielfaches der halben Periodendauer des Trägers gewählt werden, so daß gemäß dieser Nebenbedingung die Datenübertragungsrate in Stufen verändert werden kann, wobei der unmodulierte und/oder der phasenmodulierte Träger einen sinusförmigen oder rechteckförmigen Zeitverlauf aufweisen kann.

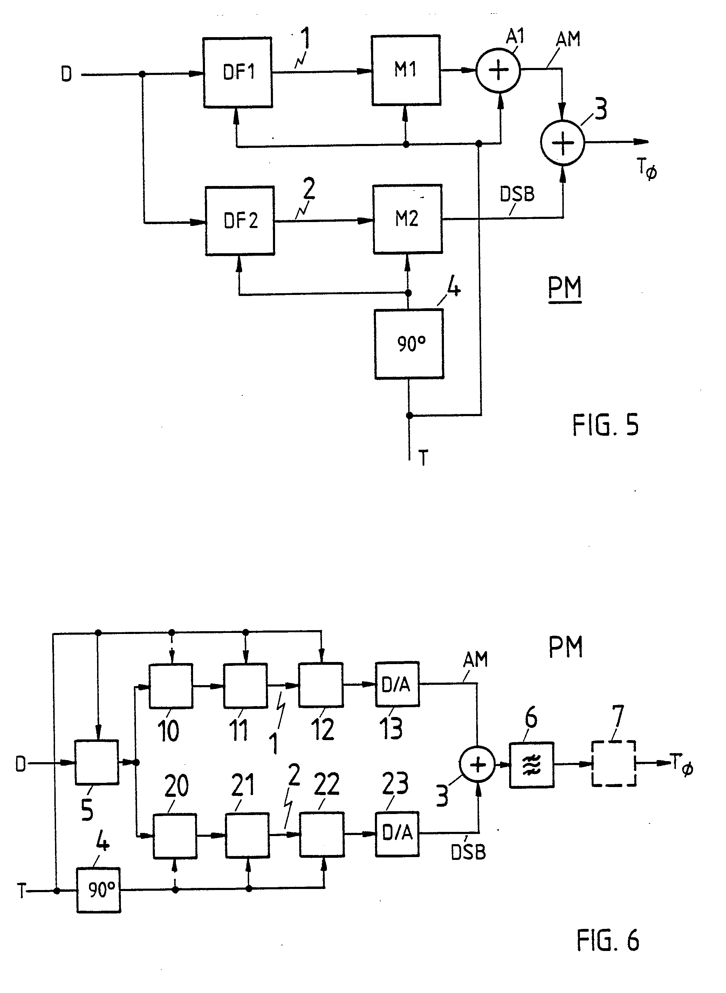

FIG. 5 zeigt ein Blockschaltbild des erfindungsgemäßen digitalen Phasenmodulators PM zum Ausführen des erfindungsgemäßen digitalen PM-Verfahrens.

Die zu übertragenden Daten D durchlaufen sowohl im In-Phase-Zweig 1 als auch im Quadratur-Zweig 2 des Phasenmodulators PM zunächst ein Digitales Filter DF1 bzw. DF2 und anschließend einen Modulator M1 bzw. M2. Der Modulator M1 im In-Phase-Zweig 1 ergibt zusammen mit dem nachgeschalteten Additionsglied A1, in dem der Träger T hinzugefügt wird, einen AM-Modulator, an dessen Ausgang das in seiner Phase nicht gedrehte amplitudenmodulierte Trägersignal AM anliegt. Der Modulator M2 liefert das in seiner Phase um 90° gedrehte DSB-Signal, das in einem zweiten Additionsglied 3 mit dem amplitudenmodulierten Träger AM des In-Phase-Zweiges 1 vektoriell addiert wird, so daß am Ausgang des Phasenmodulators der phasenmodulierte Träger $T_\phi$ erscheint. Der Träger T dient gleichzeitig als Taktsignal für die Digitalen Filter DF1 und DF2 sowie für die Modulatoren M1 und M2. Die 90°-Phasendrehung des DSB-Signals wird mit Hilfe eines digitalen 90°-Phasenschiebers 4 bewerkstelligt, wobei die 90° Phasenverschiebung in bekannter Weise durch Teilung eines schnelleren Taktes mit steigender bzw. mit fallender Flanke entsteht.

FIG. 6 zeigt ein detaillierteres Blockschaltbild einer bevorzugten Ausführungsform des erfindungsgemäßen digitalen Phasenmodulators PM gemäß FIG. 5.

In-Phase- und Quadratur-Zweig 1 bzw. 2 sind mit identischen Baugruppen aufgebaut, und zwar mit Speichern in Form von EPROMs (oder RAMs) 10 bzw. 20, Latchgliedern 11 bzw. 21, Schaltmodulatoren in Form von Ex-OR-Gattern 12 bzw. 22 sowie D/A-Wandlern 13 bzw. 23, wobei die RAMs in der Initialisierungsphase die Stützwerte aus zusätzlichen EPROMs übernehmen. Die beiden Zweige 1 und 2 werden ausgangsseitig in dem Additionsglied 3 zusammengeführt. Dem Additionsglied 3 ist ein Filterschwingkreis 6 und gegebenenfalls ein Verstärker 7 nachgeschaltet. Die EPROMs 10 bzw. 20 werden über eine gemeinsame Ansteuerung 5 angesteuert, in die die zu übertragenden Daten eingespeist werden. Die Taktinformationen T für die einzelnen Baugruppen werden für den Quadratur-Zweig mittels eines Phasenschiebers 4 um 90° phasenverschoben.

Anstatt von 2 EPROMs 10 bzw. 20 kann auch ein einziges EPROM entsprechender Größe verwendet werden, welches dann im "Multiplex-Betrieb" mit doppelter Taktrate zu betreiben ist.

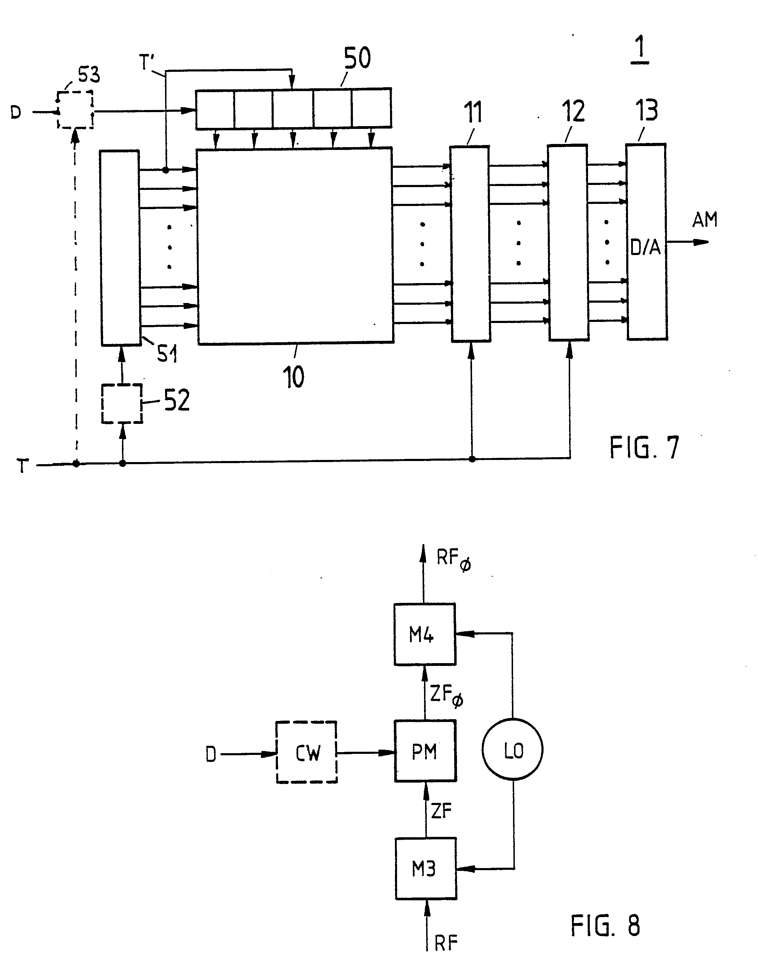

FIG. 7 zeigt einen detaillierter ausgeführten Ausschnitt der Ausführungsform des digitalen Phasenmodulators PM gemäß FIG. 6, der beispielhaft den In-Phase-Zweig 1 zeigt (der Quadratur-Zweig ist, wie bereits erwähnt, gleich aufgebaut). Mit 10 ist wiederum das EPROM (oder RAM), mit 11 das Latchglied, mit 12 der Schaltmodulator und mit 13 der D/A-Wandler bezeichnet. Die Ansteuerschaltung 5 besteht aus einem Schieberegister 50, einem Primärteiler 51 und gegebenenfalls einem Vorteiler 52 sowie gegebenenfalls einem Code-Wandler 53 zur Erzeugung eines gleichanteilsfreien, d. h. gleichstromfreien und mit ausreichender Taktinformation versehenen Leitungs-Codes. Mit T ist der Systemtakt (z. B. die Trägerfrequenz oder, wie weiter unten diskutiert, vorteilhafterweise eine für alle Trägerfrequenzen gleiche Zwischenträgerfrequenz) und mit T' der Datentakt bezeichnet.

Verwendet man, wie in FIG. 7 beispielhaft gezeigt, ein fünfstufiges Schieberegister (50), so ergeben sich $2^5 = 32$ mögliche Bit-Kombinationen. Das EPROM wird dann in 32 Bereiche unterteilt, die durch die jeweilige Bit-Kombination angewählt werden. (Es gibt in der Praxis jedoch auch Kurvenformen, die nur ein dreistufiges Schieberegister benötigen, so daß dann das EPROM in $2^3 = 8$ Bereiche zu unterteilen ist).

In den einzelnen Bereichen stehen die Stützwerte der verrundeten Kurvenform für das mittlere Bit. Bei dieser Kurvenform werden alle Vor- und Nachschwinger der verrundeten Form der beiden vor- bzw. nachlaufenden Bits mit berücksichtigt. Dadurch gelingt es, die nach der Theorie optimalen Zeitverläufe mit z. B. einer vorgegebenen Bandbreite zu erzeugen. Insbesondere lassen sich - im Unterschied zu analogen Verfahren - symmetrische Formen für die verrundeten Datenimpulse gewinnen.

Für Leitungs-Codes, die direkt aus dem NRZ-Format gewonnen werden können, wie z. B. Biphase (auch Manchester-Code genannt), können die zugehörigen verrundeten Kurvenformen direkt in den EPROMs des In-Phase- bzw. Quadratur-Zweiges abgelegt werden. Für Leitungs-Codes, die mehrere NRZ-Bits verwenden, um über das aktuelle Bit zu entscheiden, wie z. B. "Zero-Codes" oder "Block-Codes", benötigt man einen vorgeschalteten Code-Wandler, z. B. in Form eines weiteren EPROMs oder PALs. Das Ausgangssignal des Code-Wandlers besteht dann im Prinzip zwar wieder aus einem Signal im NRZ-Format, jedoch mit höherer Taktgeschwindigkeit, eingefügter Taktinformation und Gleichanteilsfreiheit (letzteres auch ausgedrückt als: laufende digitale Summe $< \infty$ ). In den "Filter"-EPROMs 10 bzw. 20 stehen dann die zu verrundeten NRZ-Daten gehörenden Kurvenformen. Die Taktgeschwindigkeit und die Auslesegeschwindigkeit sind entsprechend anzupassen.

In diesem in den FIG. 6 und 7 gezeigten Ausführungsbeispiel des erfindungsgemäßen digitalen Phasenmodulators PM erfolgt die digitale Filterung der zu übertragenden Daten, d. h. die Daten-Verrundung und gegebenenfalls Code-Wandlung (bei NRZ-Datensignalen beispielsweise), mit Hilfe von zuvor berechneten und in den beiden EPROMs 10 und 20 abgelegten Stützwerten.

Da beide EPROMs 10 und 20 über die gleiche Ansteuerschaltung 5 angesteuert werden, wird ein zeitlich richtiges Auslesen der gespeicherten und durch die zu übertragenden Datensignale D "angewählten" Datenworte über ein um 90° phasenverschobenes Latchen in den Latchgliedern 11 und 21 erreicht. Die Schaltmodulatoren 12 bzw. 22 in Form von Ex-OR-Gattern werden zur Invertierung ("Komplementbildung") benötigt.

Die digital modulierten Signale werden anschließend in den D/A-Wandlern 13 bzw. 23 in analoge (quantisiert gestufte) AM- bzw. DSB-Signale umgewandelt, die gegeneinander um 90° in ihrer Phase verschoben sind und die in dem Additionsglied 3 analog addiert werden. Zur Glättung der resultierenden phasenmodulierten Trägerschwingung, die noch in quantisiert gestufter Form vorliegt, dient der nachgeschaltete Filterschwingkreis 6, dessen Resonanzfrequenz mit der Mittenfrequenz der PM übereinstimmt. Die weitere Verarbeitung des Signals erfolgt in dem gegebenenfalls nachgeschalteten Verstärker 7.

Der Systemtakt könnte im einfachsten Fall die Trägerfrequenz T sein und würde bei einem AM-RDS für Langwelle beispielsweise direkt vom Steuersender geliefert werden. Vorteilhafter ist es jedoch, anstelle der Trägerfrequenz eine Zwischenfrequenz ZF als Systemtakt zu wählen, da damit die Datenübertragungsrate R unabhängig von der Frequenz des Trägers T gewählt werden kann.

Eine Realisierung dieser vorteilhaften Lösung für AM-RDS ist in FIG. 7 gezeigt. Durch Mischen der noch unmodulierten Trägerfrequenz RF mit der Frequenz eines Festfrequenzoszillators LO ("Local Oscillator") in einem Mischer M3 wird eine unmodulierte Zwischenfrequenz ZF erzeugt, die dem nachgeschalteten erfindungsgemäßen Phasenmodulator PM als Systemtakt dient und die mit den zu übertragenden Daten D, die gegebenenfalls zunächst einen dem Phasenmodulator PM vorgeschalteten externen Codewandler CW durchlaufen, phasenmoduliert wird. Das phasenmodulierte Zwischenfrequenzsignal $ZF_\phi$ wird anschließend in einem weiteren Mischer M4 mit der gleichen LO-Frequenz gemischt, so daß am Ausgang des Mischers M4 die gewünschte phasenmodulierte Trägerfrequenz $RF_\phi$ anliegt, die anschließend in an sich bekannter Weise weiterverarbeitet werden kann (vgl. FIG. 2).

Zur Datenverrundung und Code-Wandlung ist folgendes auszuführen:

Die Kurvenformen der verrundeten Datensignale werden in Form von Stützwerten in den beiden EPROMs abgelegt (sowohl für die zu erzeugenden AM-Signale als auch für die DSB-Signale). Für schnelle Datenübertragungsgeschwindigkeiten, d. h. im Bereich Kilobit/sec bis Megabit/sec, können die EPROMs durch schnelle RAMs ersetzt werden. Die RAMs werden in der Initialisierungsphase des Modulators durch die in den EPROMs abgelegten Werten geladen. Im Prinzip ergibt sich dadurch sonst kein Unterschied. Daher wird im weiteren Text nur von EPROMs geredet. Diese Stützwerte werden zuvor mit dem Rechner ermittelt. Da die zu übertragenden Daten immer nur 0 oder 1 sein können, lassen sich die Stützwerte bequem im voraus berechnen. Man kann daher mit EPROMs nach dem "Table-Look- Up"-Verfahren arbeiten und benötigt daher keinen Mikroprozessor oder Signalprozessor. Die Kurvenform der verrundeten Datensignale wird gemäß einer Vorgabe im Spektralbereich theoretisch ermittelt (siehe unten). Da die Verrundung breitere Kurvenformen liefert als es dem Datentakt entspricht, werden vorzugsweise zusätzlich zu dem aktuellen Bit noch die beiden vorhergehenden und die beiden nachfolgenden Bits berücksichtigt.

In den bisher diskutierten Ausführungsbeispielen ergeben die Stützwerte in den EPROMs mit Absicht noch nicht das phasenmodulierte Signal (was alternativ hierzu natürlich ganz einfach möglich wäre, indem die Stützwerte alternierend ( +/-) abgelegt werden). Die Modulation (AM und DSB) erfolgt hier in den beiden Zweigen durch zusätzlich nachgeschaltete Ex-OR-Umschalter vor den A/D-Wandlern. Der Vorteil dieser Maßnahme besteht darin, daß die Datenübertragungsrate R, die mit dem Auslesetakt für die EPROMs übereinstimmt, fast unabhängig von der Umschaltfrequenz gewählt werden kann, die gleich ist der Mittenfrequenz der PM. Der Datentakt ($T'$ in FIG. 7) sollte dabei ein ganzzahliges Vielfaches des Umschalt- oder Systemtaktes sein.

Die Modulation im Quadratur-Zweig (2 in FIG. 6) erfolgt in den Ausführungsbeispielen in den FIG. 6 und 7 durch Latchen mit einem um einen halben Takt versetzten Systemtakt (T in FIG. 7), so daß die erforderliche $90°$-Phasendrehung erst im Latchglied (22 in FIG. 6) des Quadratur-Zweiges entsteht.

Alternativ hierzu könnte man das EPROM des Quadraturzweiges direkt mit dem um $90°$ gedrehten Systemtakt ansteuern. Hierzu müßten gegebenenfalls die hier einlaufenden Daten um einen halben Systemtakt verzögert werden.

Zur Abhängigkeit der Datenübertragungsraten R von der (Zwischen-)Trägerfrequenz ist folgendes zu sagen:

Aufgrund des Modulationsprinzips ist zu fordern, daß in eine Taktperiode $T'$ des Datentaktes eine ganzzahlige Anzahl von Perioden des Systemtaktes, also der Träger- bzw. Zwischenträgerschwingung, passen muß. Diese Forderung resultiert aus der digitalen Realisierung der Phasenmodulation, damit die Anzahl der erforderlichen Stützstellen in den EPROMs möglichst klein gehalten werden kann. Für eine Zwischenträgerfrequenz von 200 kHz ergibt sich damit für die Datenübertragungsrate R

$$R = 200 \text{ kHz}/2^N \qquad (5)$$

Der Faktor $2^N$ ist erforderlich, damit durch das Ablegen der Stützwerte in einem EPROM die Ansteuerung der EPROMs zeitlich für die Adressen in Potenzen von 2 erfolgen kann, so daß die einzelnen Stützwerte vorteilhafterweise alle gleich breit werden.

Aus der Gleichung ergibt sich:

| N | 10 | 11 | 12 | 13 | 14 | (6) |
|---|----|----|----|----|----|-----|
| R (sec$^{-1}$) | 195,3... | 97,6... | 48,8... | 24,4... | 12,2... | |

wobei nur die Datenübertragungsrate R mit N < 12 in der Praxis von Bedeutung sein dürfte.

Nimmt man eine zeitliche Auflösung von 256 Stützwerten für eine Datentaktperiode $T'$ an, so müssen nur die acht niedrigsten Teiler 2:1-Teiler sein. Durch einen 3:1-Vorteiler (52 in FIG. 7) ergäbe sich beispeilsweise mit Gleichung (3):

| N | 8 | 9 | 10 | (7) |
|---|---|---|----|-----|
| R (sec$^{-1}$) | 260... | 130,2... | 65,1... | |

und mit einem 5:1-Vorteiler entsprechend

| N | 8 | 9 | 10 | (8) |
|---|---|---|---|---|
| R (sec$^{-1}$) | 156,25 | 78,125 | 39,... | |

Hieraus folgt, daß die Datenübertragungsrate von der gewählten (Zwischen-)Trägerfrequenz abhängig ist und sie sich durch Wahl eines geeigneten Vorteilers in vernünftigen Grenzen variieren läßt.

Von praktischem Interesse könnten folgende Datenübertragungsraten bei AM-RDS von Interesse sein.

R : 195,... / 156,... / 130,... / 97,... sec $^{-1}$     (9)

Ein vorteilhafter Nebeneffekt dieser "krummen" Werte für R ist, daß 50Hz-Störungen (und deren Oberschwingungen) leicht unterdrückt werden können, was insbesondere empfangsseitig von Bedeutung ist.

Zur Code-Wandlung ist folgendes zu sagen:

Von der Datenquelle werden die Daten (taktsynchron mit dem Datentakt T′ in FIG. 7) i. a. im NRZ-Format geliefert.

In den EPROMs könnten zwar die verrundeten NRZ-Daten in Form von Stützwerten abgelegt werden, jedoch ergeben sich in der Praxis Schwierigkeiten bei der Datenübertragung, da NRZ-Signale nicht gleichstromfrei sind, so daß als Folge das Augenmuster eine geringere Öffnung erhält, der Takt schwierig zu regenerieren ist und der betreffende Sender nicht mehr als Normalfrequenzsender betrieben werden kann.

Es ist deshalb günstiger, die Stützwerte in den EPROMs gleichstromfrei, z. B. im BIPHASE-Format,. abzulegen, mit dem sich der Takt auf einfache Art und Weise regenerieren läßt (bei allerdings verdoppelter Bandbreite).

Der Biphase-Code ist gleichanteilsfrei und hat ein Maximum an Taktinformation, nämlich pro Bit eine Taktflanke. Der Nachteil ist die gegenüber NRZ erforderliche doppelte Bandbreite.

Aus der Literatur sind verschiedene andere gleichanteilsfreie und mit Taktinformationen versehene Codes ("Leitungs-Codes") bekannt, die z. B. bei der magnetischen Speicherung von Daten verwendet werden, wie z. B.:

M$^2$ (nach Mallinson und Miller)

QP (Quadra-Phase nach Bixly und Ketcham)

ZM (Zero-Modulation nach Patel)

Gruppen-Codes; z. B.: 5B/6B oder Block-Codes

Diese Codes enthalten weniger Taktinformationen als der Biphase-Code und kommen demzufolge mit einer geringeren Bandbreite aus. Die erforderliche Bandbreite ist vom Code abhängig und ist ca. 20 % bis 40 % größer als bei NZR. Dafür ist aber das Augenmuster (und damit die Fehlerrate) günstiger als bei NRZ.

Die Code-Wandlung NRZ → Biphase kann direkt in den EPROMs vorgenommen werden, da nur die zugehörigen verrundeten Kurvenformen eingeschrieben werden müssen. Die anderen gleichanteilsfreien Codes benötigen immer mehrere Bits, um zu entscheiden, wie das folgende Bit werden muß, damit der Gleichanteil verschwindet. Daher ist ein zusätzlicher vorgeschalteter Code-Wandler erforderlich, der seinerseits auch als EPROM oder PAL realisiert wird.

Die aus dem Code-Wandler ausgelesenen Daten haben im Prinzip wieder NRZ-Format, jedoch mit schnellerem Takt.

In den "Filter"-EPROMs ist dann eine Kurvenform abzulegen, die der Filterung von NRZ-Signalen entspricht. Der Systemtakt ist passend zu wählen.

Die für den digitalen Phasenmodulator gewählte Struktur läßt sich auch für einen Quadratur-DSB-Modulator verwenden, der fälschlicherweise in der Literatur häufig als 4PSK-Modulator bezeichnet wird (4 PSK: Phase-Shift-Keying mit vier Zuständen 0°, 90°, 180°, 270°). Hierzu sind folgende, im wesentlichen softwaremäßige Änderungen notwendig:

- Im In-Phase- und im Quadratur-Zweig sind die Kurvenformen für je eine verrundete DSB-Form abzulegen (d. h. beide Zweige sind identisch bis auf die 90°-Drehung).

- Der Code-Wandler muß zusätzlich zu den für den Phasenmodulator erforderlichen Aufgaben noch die Umwandlung des Bit-Stromes in zwei Di-Bit-Ströme durchführen. Das bedeutet, daß der In-Phase-Zweig und der Quadratur-Zweig von unterschiedlichen Bit-Strömen moduliert werden.

Es versteht sich, daß die Erfindung mit fachmännischem Können aus- und weitergebildet werden kann bzw. an die unterschiedlichen Anwendungen angepaßt werden kann, ohne daß dies hier an dieser Stelle näher erläutert werden müßte.

So ist es z. B. möglich, die Reihenfolge des Latchgliedes (11, 21 in FIG. 6) und des Ex-OR-Umschalters (12, 22 in FIG. 6 in den beiden Zweigen (1; 2 in FIG. 6) des erfindungsgemäßen Phasenmodulators PM ohne Funktionsbeeinträchtigung des Modulators zu vertauschen.

Ferner ist es in speziellen Anwendungen (z. B. unveränderliche Datenübertragungsrate und unveränderliche Trägerfrequenz) denkbar, anstelle des bisher diskutierten Verfahrens, bei dem das unmodulierte Signal in den EPROMs abgelegt wird und die Modulation durch Inversion des höchstwertigen Bits erfolgt, ein Verfahren zu verwenden, bei dem das bereits modulierte Signal in den EPROMs abgelegt wird.

## Ansprüche

1. Verfahren zur digitalen Phasenmodulation eines Trägers durch Datensignale mittels eines digitalen Phasenmodulators, welcher einen In-Phase-Zweig, einen Quadratur-Zweig und ein nachgeschaltetes Additionsglied zur Zusammenführung der beiden Zweige enthält, dadurch gekennzeichnet, daß die Datensignale (D) vor der Phasenmodulation des Trägers (T) zwecks spektraler Formung und Bandbegrenzung einer digitalen Filterung unterworfen werden.

2. Verfahren nach Anspruch 1, dadurch gekennzeichnet, daß die Datensignale (D) vor oder während der digitalen Filterung durch eine Codewandlung gleichstromfrei gemacht werden und mit für die weitere Verarbeitung erforderlichen Taktinformationen versehen werden.

3. Verfahren nach einem der Ansprüche 1 bis 2, dadurch gekennzeichnet, daß zur Realisierung der digitalen Filterung von binären Datensignalen (D)
- die Datensignale (D) in eine Folge von Worten einer vorgegebenen Länge mit einer ungeradzahligen Anzahl von Bits unterteilt werden;
- für jedes mögliche Wort der dem mittleren Bit des Wortes entsprechende Zeitverlauf des gefilterten Wortes zuvor berechnet wird und in Form von Stützwerten in einem durch das Wort adressierten Bereich mindestens eines Speichers abgelegt wird;
- durch ein momentan anliegendes Word der dem mittleren Bit zugeordneten Bereich in dem mindestens ein Speicher angewählt wird und die in diesem Bereich abgelegten Stützwerte synchron zur Frequenz des Trägers (T) ausgelesen werden.

4. Verfahren nach Anspruch 3, dadurch gekennzeichnet, daß zur Reduzierung der für die weitere Verarbeitung der Datensignale (D) erforderlichen Wortlänge die zuvor berechneten Zeitverläufe der gefilterten Worte mit einer Fensterfunktion gewichtet werden.

5. Verfahren nach einem der Ansprüche 3 bis 4, dadurch gekennzeichnet, daß die Dauer der einzelnen Bist als ganzzahliges Vielfaches der Periodendauer des Trägers (T) gewählt wird.

6. Verfahren nach einem der Ansprüche 1 bis 5, dadurch gekennzeichnet, daß im In-Phase-Zweig eine Amplitudenmodula tion (AM) und im Quadraturzweig eine Doppelseitenbandmodulation (DSB) durchgeführt wird und daß dabei die beiden Modulationen derart korrigiert werden, daß bei der daraus resultierenden Phasenmodulation des Trägers (T) eine konstante, zumindest jedoch eine annähernd konstante Amplitude (A) und eine zu den digital gefilterten Datensignalen proportionale, zumindest jedoch annähernd proportionale Phasenauslenkung ($\phi$) des Trägers (T) erreicht werden.

7. Verfahren nach Anspruch 6, dadurch gekennzeichnet, daß der Träger (T) und/oder der phasenmodulierte Träger ($T_\phi$) einen sinusförmigen oder einen rechteckförmigen Zeitverlauf aufweisen.

8. Digitaler Phasenmodulator zum Ausführen des Verfahrens nach einem der Ansprüche 1 bis 7, dadurch gekennzeichnet, daß sowohl der In-Phase-Zweig (1) als auch der Quadratur-Zweig (2) jeweils aus einem Modulator (M1, M2) und einem dem jeweiligen Modulator (M1, M2) vorgeschalteten Digitalfilter (DF1, DF2) besteht (FIG. 5).

9. Digitaler Phasenmodulator nach Anspruch 8, dadurch gekennzeichnet,
- daß die digitalen Filter in Form von Speichern (10, 20), vorzugsweise in Form von EPROMs, realisiert sind;
- daß die in den vorzugsweise in Form von EPROMs realisierten Speichern (10, 20) in Form von Stützwerten abgelegten Kurvenformen der verrundeten Daten exakt den zuvor berechneten Zeitverläufen entsprechen;
- daß die Modulatoren als Schaltmodulatoren (12, 22), vorzugsweise in Form von Ex-OR-Gattern, realisiert sind;
- daß in den beiden Phasenmodulator-Zweigen (1, 2) Mittel zur Datenrückwandlung (11, 13; 21, 23) vorgesehen sind (FIG. 6).

10. Digitaler Phasenmodulator nach Anspruch 9, dadurch gekennzeichnet, daß zur Änderung der Übertragungsfunktion der Digitalfilter die der jeweiligen Übertragungsfunktion entsprechenden Kurvenformen der verrundeten Daten in unterschiedlichen, vorzugsweise in Form von EPROMs realisierten Speichern (10, 20) in Form entsprechender Stützwerte abgelegt sind und daß diese unterschiedlichen Speicher auswechselbar sind.

11. Digitaler Phasenmodulator nach einem der Ansprüche 9 bis 10, dadurch gekennzeichnet, daß bei größeren Datengeschwindigkeiten die Speicher (10, 20) in Form von schnellen RAMs realisiert sind und daß diese RAMs in der Initialisierungsphase die Stützwerte aus separaten EPROMs übernehmen.

12. Digitaler Phasenmodulator nach einem der Ansprüche 9 bis 11, dadurch gekennzeichnet, daß die Modulatoren (12, 22) bei konstanter Datenübertragungsrate entfallen und stattdessen die Modulation bei der Berechnung der Kurvenformen der verrundeten Daten bereits berücksichtigt ist.

13. Digitaler Phasenmodulator nach Anspruch 9, dadurch gekennzeichnet, daß die Mittel zur Datenrückwandlung jeweils aus einem Latchglied (11; 21) und einem nachgeschalteten Digital-Analog-Wandler (13; 23) bestehen (FIG. 6).

14. Digitaler Phasenmodulator nach Anspruch 13, dadurch gekennzeichnet, daß in den beiden Phasenmodulator-Zweigen (1, 2) der Schaltmodulator (12; 22) jeweils zwischen Latchglied (11; 21) und Digital-Anlog-Wandler (13; 23) geschaltet ist (FIG. 6).

15. Digitaler Phasenmodulator nach Anspruch 13, dadurch gekennzeichnet, daß in den beiden Phasenmodulator-Zweigen (1, 2) das Latchglied (11; 21) jeweils zwischen Schaltmodulator (12; 22) und Ditial-Analog-Wandler (13; 23) geschaltet ist.

16. Digitaler Phasenmodulator nach einem der Ansprüche 8 bis 15, dadurch gekennzeichnet, daß die Speicher (10, 20) der beiden Phasenmodulator-Zweige (1, 2) über eine gemeinsame Ansteuerschaltung (5) angesteuert sind (FIG. 5).

17. Digitaler Phasenmodulator nach Anspruch 16, dadurch gekennzeichnet, daß in der Ansteuerschaltung (5) für jeden Zweig (1, 2) des Phasenmodulators jeweils ein Schieberegister (50) für die zu übertragenden Daten (D) und ein Primärteiler (51) zum Anwählen und Auslesen der den in dem Schieberegister (50) gespeicherten Daten entsprechenden gespeicherten Stützwerten in dem zugehörigen Speicher (10) vorgesehen sind (FIG. 7).

18. Digitaler Phasenmodulator nach Anspruch 17, dadurch gekennzeichnet, daß in der gemeinsamen Ansteuerschaltung (5) ein dem Schieberegister (5) vorgeschalteter Code-Wandler (53) enthalten ist (FIG. 7).

19. Digitaler Phasenmodulator nach einem der Ansprüche 17 bis 18, dadurch gekennzeichnet, daß dem Primärteiler (51) ein Vorteiler (52) vorgeschaltet ist (FIG. 7).

20. Digitaler Phasenmodulator nach Anspruch 19, dadurch gekennzeichnet, daß der Vorteiler (52) zur Änderung der Datenübertragungsrate in seinem Teilerverhältnis änderbar ist.

21. Digitaler Phasenmodulator nach einem der Ansprüche 9 bis 20, dadurch gekennzeichnet, daß die beiden vorzugsweise in Form von EPROMs realisierten Speicher (10, 20) mit einem einzigen im Multiplex-Betrieb mit doppelter Taktrate betriebenen EPROM realisiert sind.

22. Digitaler Phasenmodulator nach einem der Ansprüche 8 bis 21, gekennzeichnet durch die Anwendung in einem Radio-Daten-System für ein amplitudenmoduliertes Hörrundfunksystem.

23. Digitaler Phasenmodulator nach Anspruch 22, dadurch gekennzeichnet, daß das Radio-Daten-System für die Übermittlung von Verkehrsinformationen vorgesehen ist, vorzugsweise von regional adressierten und durch einen Verkehrsteilnehmer gezielt abrufbaren und mit Hilfe eines beim Verkehrsteilnehmer lokalisierten Sprachausgabesystems ausgebbaren Verkehrsinformationen.

24. Digitaler Phasenmodulator nach einem der Ansprüche 22 bis 23, dadurch gekennzeichnet, daß die Phasenmodulation des Trägers (RF) durch die Phasenmodulation eines Zwischenträgers (ZF) realisiert ist (FIG. 8).

25. Digitaler Phasenmodulator nach einem der Ansprüche 8 bis 21, gekennzeichnet durch die Anwendung in der Studiotechnik als Datenübertragungssystem zwischen Studio und den einzelnen Sendern.

26. Digitaler Phasenmodulator nach einem der Ansprüche 8 bis 21, gekennzeichnet durch die Anwendung bei der Steuerung der Lastverteilung in Stromversorgungsnetzen.

FIG. 1

FIG. 2

FIG. 3

FIG. 4

EP 0 347 541 A1

FIG. 5

FIG. 6

FIG. 7

FIG. 8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WO-A-8 603 356 (DEVON COUNTY COUNCIL) * Seite 4, Zeilen 16-30; Seite 17, Zeilen 26-29; Seite 23, Zeilen 24-33; Seite 24, Zeilen 8-14; Seite 26, Zeilen 24-33; Seite 31, Zeilen 8-12; Seite 34, Zeilen 4-9,20-22; Ansprüche 1,2; Figuren 6,10 * | 1,3,5,8 | H 04 L 27/20 H 04 H 1/00 |
| A | | 9,13,16 ,17,21 | |
| | --- | | |
| X | US-A-4 516 087 (BRUENE) * Spalte 4, Zeilen 54-64; Spalte 7, Zeilen 19-24; Spalte 7, Zeile 60 - Spalte 8, Zeile 9; Spalte 8, Zeilen 32-46; Figuren 5-7 * | 1,3 | |
| | --- | | |
| X | US-A-4 745 628 (McDAVID) * Spalte 4, Zeilen 17-48; Spalte 8, Zeilen 35-37 * | 1,3 | |
| A | | 9,10 | |
| | --- | | RECHERCHIERTE SACHGEBIETE (Int. Cl.4) |
| A | INTERNATIONAL CONFERENCE ON COMMUNICATIONS, Washington, 7.-10. Juni 1987, Band 3, Seiten 39.3.1-39.3.5, IEEE, New York, US; S. YOSHIDA et al.: "Anti-multipath modulation technique - Machester-coded PSK (MC-PSK)" * Figuren 1,3 * | 1,2 | H 04 L H 04 H |
| | --- | | |
| A | US-A-4 679 238 (MARKOVIC) * Figur 3 *   --- -/- | 1,6,7, 22,23 | |

Der vorliegende Recherchenbericht wurde für alle Patentansprüche erstellt

| Recherchenort | Abschlußdatum der Recherche | Prüfer |
|---|---|---|
| DEN HAAG | 11-09-1989 | VEAUX,C.J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.............................................................
& : Mitglied der gleichen Patentfamilie, übereinstimmendes Dokument

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 10, nr. 251 (E-432)[2307], 28. August 1986, Seite 140 E 432; & JP-A-61 80 932 (NEC CORP.) 24-04-1986 * Zusammenfassung * ----- | 15 | |

**RECHERCHIERTE SACHGEBIETE (Int. Cl.4)**

Der vorliegende Recherchenbericht wurde für alle Patentansprüche erstellt

| Recherchenort | Abschlußdatum der Recherche | Prüfer |
|---|---|---|
| DEN HAAG | 11-09-1989 | VEAUX,C.J. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument